# EUROPEAN PATENT APPLICATION

(11) **EP 2 899 465 A1**
(43) Date of publication of application: **29.07.2015**
(21) Application number: 14152633.5
(22) Date of filing: 27.01.2014
(51) Int. Cl.: F23R 3/02, F23R 3/54, F02C 3/22, C01B 13/02

(54) **Combustor device for a gas turbine for being coupled to an oxygen generation unit**

(71) Applicant: Siemens Aktiengesellschaft, 80333 München (DE)
(72) Inventor: Sjödin, Mats, 612 33 Finspong (SE)

(57) **Abstract**

The present invention relates to a combustor device (100) for a gas turbine (150). The combustor device (100) comprises an inner shell (110) which forms a combustion chamber (111) and an outer shell (120) surrounding the inner shell (110) such that an outer channel (101) is formed between the inner shell (110) and the outer shell (120). The outer shell (120) comprises a first inlet (102) which is coupleable to a compressor (151) of the gas turbine (150) for feeding a compressed fluid from the compressor (151) into the outer channel (101) and a first outlet (103) for draining off the compressed fluid from the outer channel (101). The first outlet (103) is coupleable to a functional unit, in particular an oxygen generation unit, using the compressed fluid. The inner shell (110) comprises a second inlet (104) which is coupleable to the functional unit such that the compressed fluid is feedable from the functional unit (600) into the combustion chamber (111). The inner shell (110) further comprises a second outlet (105) which is coupleable to a turbine stage (152) of the gas turbine (150) for exhausting the compressed fluid out of the combustion chamber (111).

## Description

### Field of invention

The present invention relates to a combustor device for a gas turbine for being coupled to an oxygen generation unit and to the gas turbine. Furthermore, the present invention relates to a method for operating the gas turbine.

### Art Background

Gas turbines are used to drive a generator for generating electric power. A gas turbine comprises a compressor, a combustor and subsequent turbine stages. The working fluid, such as air, is compressed in the compressor and utilized as oxidizer in the combustor. Next, the hot and compressed working fluid drives the turbine stages for generating mechanical work. Downstream of the turbine stages, the hot working fluid is exhausted from the gas turbine.

The hot working fluid which is exhausted from the gas turbine may be used for subsequent processes which need heat for example. The hot working gas may be used directly in the subsequent processes or may flow through a heat exchanger for transferring the heat to a process fluid of the subsequent processes.

Furthermore, components of the working fluid, such as oxygen, may be used for functional units, such as oxygen generation units, which are coupled to the gas turbine.

For example, the oxygen generation unit may comprise membranes which separate oxygen from the working fluid which is exhausted out of the gas turbine. In order to improve the efficiency of the oxygen separating membranes, the working fluid should be hot, and should have a high pressure and should have high oxygen content. Hence, the exhausted working gas of the gas turbine which exits the gas turbine may be used for the functional units.

### Summary of the Invention

It may be an object to provide a gas turbine which is efficiently coupleable to a functional unit using the working fluid of the gas turbine.

This objective may be solved by a combustor device for a gas turbine, a gas turbine and a method for operating the combustor device according to the independent claims.

According to a first aspect of the present invention, a combustor device for a gas turbine is presented. The combustor device comprises an inner (e.g. cylindrical or conical) shell which forms and surrounds a combustion chamber and an outer shell surrounding the inner shell such that an outer channel is formed between the inner shell and the outer shell. The outer shell comprises a first inlet which is coupleable to a compressor of the gas turbine for feeding a compressed fluid from the compressor into the outer channel and one or more first outlets for draining off the compressed fluid from the outer channel. The one or more outlets are coupleable to a functional unit, in particular an oxygen generation unit, using the compressed fluid. The inner shell comprises a second inlet which is couple able to the functional unit such that the compressed fluid is feed able from the functional unit into the combustion chamber. The inner shell further comprises a second outlet which is couple able to a turbine stage of the gas turbine for exhausting the compressed fluid out of the combustion chamber.

According to a further aspect of the present invention, a gas turbine is presented, wherein the gas turbine comprises one or more above described combustor device(s) and the functional unit which is coupled to the first outlet of the outer shell and the second inlet of the inner shell.

Specifically, the gas turbine comprises the above described combustor device and a further combustor device as described above. The first outlet of the combustor device and a further first outlet of the further combustor device is coupleable to the functional unit. Hence, compressed fluid from the combustor device and the further combustor device may stream to the functional unit. Additionally or alternatively the second inlet of the combustor device and the further second inlet of the further combustor device are coupleable to the functional unit, such that compressed fluid drained of from the functional unit may be fed to the second inlet and the further second inlet.

According to a further aspect of the present invention a method for operating an above described combustor device is presented. According to the method, a compressed fluid is fed from the compressor into the outer channel. The compressed fluid is drained off from the outer channel and is used by the functional unit, in particular the oxygen generation unit. Next, the compressed fluid is fed from the functional unit into the combustion chamber. Finally, the compressed fluid is exhausted (in particular after being mixed with fuel and after being burned) out of the combustion chamber.

The gas turbine comprises a compressor, a combustion section at which the combustion device(s) (one two or more combustion devices as described above) is/are arranged and turbine stages which are arranged downstream of the combustion device(s).

The gas turbine comprises a rotating shaft to which the blades of the compressor and the blades of the turbine stages are coupled. The rotating axis of the rotating shaft defines an axial direction of the gas turbine. Accordingly, a radial direction directs to the rotating axis and crosses the rotating axis, wherein the radial direction is perpendicular to the axial direction. A circumferential direction is directed around the axial direction and is perpendicular to the radial direction and the axial direction.

A (working) fluid, such as air, streams generally along the axial direction through the compressor, through the combustion device and through the turbine stages. The working fluid is compressed in the compressor and streams subsequently into the combustion device. In the combustion device, fuel is injected into the combustion chamber of the combustion device and the fuel is mixed with the compressed fluid. In the combustion device, the mixture of fuel and compressed fluid is ignited and burned. The hot compressed fluid is exhausted out of the combustion chamber and streams further into the turbine stages for driving the gas turbine and for generating mechanical work.

The inner shell and the outer shell may be formed of sheet plate material or cast material. The inner shell and the outer shell may be formed in a tubular-like shape, wherein the outer shell surrounds the inner shell. Between the outer shell and the inner shell, a predefined distance or a gap is formed which forms the outer channel.

Within the inner shell, the combustion chamber is formed, wherein the compressed fluid/fuel mixture is burnt such that heat is generated. The heat is transferred via the wall of the inner shell to the compressed fluid within the outer channel streaming from the compressor to the first outlet(s). Hence, the compressed fluid is heated up by streaming through the outer channel.

The outer channel is isolated and separated from the inner combustion chamber. Hence, a mixture of the burned compressed fluid within the combustion chamber and the compressed fluid within the outer channel is avoided.

According to the approach of the present invention, the functional unit receives a compressed hot fluid before the compressed hot fluid is mixed with fuel and is ignited. According to the approach of the present invention, the compressed fluid streams after leaving the compressor through the outer channel of the combustor device and e.g. through a further outer channel of a further combustor device. Heat is transferred from the combustion chamber to the outer channel, such that the compressed fluid is heated up before leaving the outer channel out of the first outlet. The functional unit is coupled to the first outlet(S), such that the functional unit receives hot compressed fluid before the fluid is ignited and burned. Because the compressed fluid is drained off before combustion, the compressed fluid has a high oxygen content and a low amount of dirt particles, such as soot particles.

After the functional unit has used the hot compressed fluid, the vitiated compressed fluid is injected through the second inlet(s) of the inner shell into the combustion chamber.

According to a further exemplary embodiment, the second inlet and the second outlet are formed with respect to each other such that a flow diameter of the second inlet is larger than a further flow diameter of the second outlet. Hence, at the second outlet, a nozzle effect may be achieved such that the burned compressed fluid is accelerated when flowing through the second outlet into the turbine stage.

According to a further exemplary embodiment, the inner shell has a cone shape profile such that the inner shell tapers from the second inlet to the second outlet. If the inner shell has a cone shaped profile, wherein a section of the cone shaped inner shell at the second inlet has a larger cross-sectional shape then a further section of the cone shaped inner section at the second outlet, a nozzle effect is generated and the streaming velocity of the compressed fluid is increased when flowing from the second inlet to the second outlet.

According to a further exemplary embodiment, the combustor device further comprises at least one burner device which is coupled to the inner shell such that fuel is injectable into the combustion chamber. The inner shell may form a tubular shape wherein along a circumferential direction around the inner shell, a plurality of spaced burner devices may be arranged in order to provide a homogenous ignition of the fuel inside the combustion chamber. Each burner device may comprise a fuel injector for injecting fuel and/or a fuel/air mixture and an ignitor for igniting the fuel. In an alternative embodiment, the inner wall has a ring shaped and surrounds the shaft of the gas turbine. Accordingly, a plurality of combustion chambers or one large combustion chamber is arranged along the circumferential direction of the gas turbine. Hence, a burner device or a plurality of burner devices may be arranged spaced apart from each other along the circumferential direction of the gas turbine at the inner shell.

According to a further exemplary embodiment, the first inlet, the first outlet, the second inlet and the second outlet are arranged such that a first component of a first flow direction of the compressed fluid in the outer channel is antiparallel to a second component of a second flow direction of the compressed fluid in the combustion channel. Hence, by the above described exemplary embodiment, a compact design of the combustion device is achieved.

According to a further exemplary embodiment, the outer channel comprises a fluid directing section for directing the compressed fluid along a flow direction which has a component antiparallel to the main flow direction of the gas turbine. The fluid directing section comprises for example baffle plates or other directing fins for guiding the compressed fluid along a desired direction.

According to a further exemplary embodiment, the functional unit is an oxygen generation unit. The oxygen generation unit comprises for example membranes which separate oxygen from the fluid which is exhausted out of the gas turbine. The oxygen generation unit is coupled to the first outlet such that the compressed fluid which is heated up during flowing through the outer channel may be fed into the oxygen generation unit. The oxygen separating membranes separate partially the oxygen from the compressed fluid. The compressed fluid has a lower amount of oxygen after passing the oxygen separation membranes. The oxygen generation unit is further coupled to the second inlet and the compressed fluid is fed after leaving the oxygen generation unit through the second inlet into the combustion chamber for being mixed with an injected fuel and for being burned together with the fuel. The remained oxygen amount in the compressed fluid after partial oxygen separation is still sufficient for the combustion within the combustion chamber such that the combustion with the compressed fluid which has passed the oxygen generation unit is sufficiently efficient.

Because the compressed fluid does not comprise any combustion particles and because the compressed fluid comprises a high pressure and a high temperature, the efficiency of the oxygen separating membranes is increased.

Downstream of the compressor the combustor device and further combustor devices may be coupled. The further combustor devices are designed and may have the same features as the combustor device described above. The combustor devices may be arranged spaced apart from each other and may be arranged one after another along the circumferential direction.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a schematic view of a gas turbine comprising a combustion device according to an exemplary embodiment of the present invention;
- Fig. 2: shows a perspective view of an exhaust section of the combustion device of Fig. 1 according to an exemplary embodiment of the present invention;
- Fig. 3: shows a schematic view of a combustion device according to a further exemplary embodiment of the present invention;
- Fig. 4: shows a schematic sectional view of the combustion device shown in Fig. 3 according to an exemplary embodiment of the present invention;
- Fig. 5: shows a perspective view of the combustion device of Fig. 4 according to an exemplary embodiment of the present invention; and
- Fig. 6: shows a schematic view of an oxygen generation system comprising a gas turbine with the combustion device and an oxygen generation unit.

### Detailed Description

The illustration in the drawings is in schematic form. It is noted that in different figures, similar or identical elements are provided with the same reference signs.

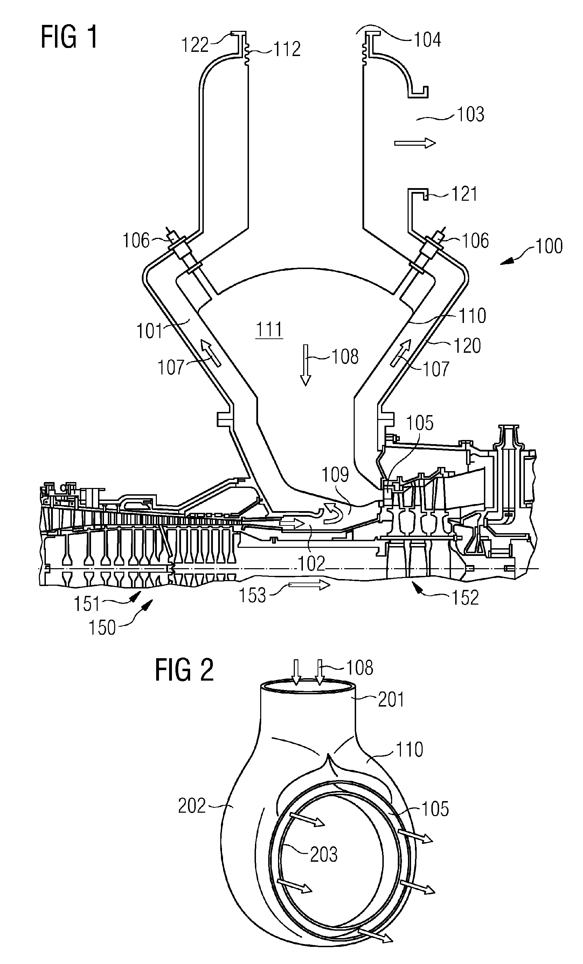

Fig. 1 shows a gas turbine 150 comprising a combustion device 100 according to an exemplary embodiment of the present invention. The combustor device 100 comprises an inner shell 110 which forms a combustion chamber 111 and an outer shell 120 surrounding the inner shell 110 such that an outer channel 101 is formed between the inner shell 110 and the outer shell 120. The outer shell 120 comprises a first inlet 102 which is couple able to a compressor 151 of the gas turbine 150 for feeding a compressed fluid from the compressor 151 into the outer channel 101 and a first outlet 103 for draining off the compressed fluid from the outer channel 101. The first outlet 103 is couple able to a functional unit 600, in particular an oxygen generation unit, using the compressed fluid. The inner shell 110 comprises a second inlet 104 which is couple able to the functional unit 600 such that the compressed fluid is feedable from the functional unit 600 into the combustion chamber 111. The inner shell 110 further comprises a second outlet 105 which is coupleable to a turbine stage 152 of the gas turbine 150 for exhausting the compressed fluid out of the combustion chamber 111.

The gas turbine 150 comprises a compressor 151, a combustion section at which the combustion device is arranged and turbine stages 152 which are arranged downstream of the combustion device 100.

The gas turbine 150 comprises a rotating shaft to which the blades of the compressor 151 and the blades of the turbine stages 152 are coupled.

A (working) fluid, such as air, streams generally along the axial direction, i.e. along the main flow direction 153, through the compressor 151, through the combustion device 100 and further through the turbine stages 153. The fluid is compressed in the compressor 151 and streams subsequently into the combustion device 100 as compressed fluid. In the combustion device 100, fuel is injected into the combustion chamber 111 inside the inner shell 110 of the combustion device 100 and the fuel is mixed with the compressed fluid. In the combustion device 100, the mixture of fuel and compressed fluid is ignited and burned. The hot compressed fluid is exhausted out of the combustion chamber 111 and streams further into the turbine stages 153 for driving the gas turbine 150 and for generating mechanical work.

The inner shell 110 and the outer shell 120 may be formed in a tubular-like shape, wherein the outer shell 120 surrounds the inner shell 110. Between the outer shell 120 and the inner shell 110, a predefined distance or a gap is formed which forms the outer channel 101.

Within the inner shell 110, the combustion chamber 111 is formed, wherein the compressed fluid/fuel mixture is burnt such that heat is generated. The heat is transferred via the wall of the inner shell 110 to the compressed fluid within the outer channel 101 streaming from the compressor 151 to the first outlet 103. Hence, the compressed fluid is heated up by streaming through the outer channel 101.

The outer channel 101 is isolated and separated from the inner combustion chamber 111. Hence, a mixture of the burned compressed fluid within the combustion chamber 111 and the compressed fluid within the outer channel 101 is avoided.

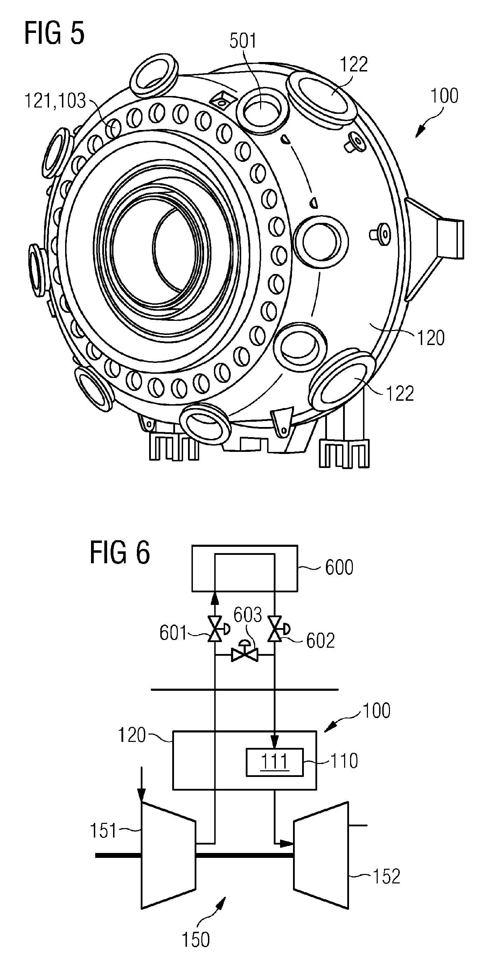

The functional unit 600 (see Fig. 6) receives the compressed hot fluid before the compressed hot fluid is mixed with fuel and is ignited in the combustion chamber 111. The compressed fluid streams after leaving the compressor 151 through the first inlet 102 into the outer channel 101. Heat is transferred from the combustion chamber 111 to the outer channel, such that the compressed fluid is heated up before leaving the outer channel 101 out of the first outlet 103. The functional unit 600 is coupled to the first outlet 103, such that the functional unit 600 receives hot compressed fluid before the compressed fluid is ignited and burned. Because the compressed fluid is drained off before combustion, the compressed fluid has a high oxygen percentage and a low amount of dirt particles, such as soot particles.

After the functional unit 600 has used the hot compressed fluid, the compressed fluid is injected through the second inlet 104 of the inner shell 110 into the combustion chamber 111.

As shown in Fig.1, the inner shell 110 comprises an inner flange 112 to which a respective connection to the functional unit may be fixed. The inner flange 112 forms the second inlet 104, for example. Around the inner flange 112, a further outer flange 122 of the outer shell 120 may be attached such that the outer flange 122 surrounds the inner flange 112 and the second inlet 104, respectively.

Furthermore, the outer shell 120 comprises an outer flange 121 to which the respective connection to the functional unit 600 may be fixed. The outer flange 121 forms the first outlet 103, for example.

As shown in Fig. 1, the second inlet 104 and the second outlet 105 are formed with respect to each other such that a flow diameter of the second inlet 104 is larger than a further flow diameter of the second outlet 105. Hence, at the second outlet 105, a nozzle effect is achieved such that the burned compressed fluid is accelerated when flowing through the second outlet 105 into the turbine stage 153.

The inner shell 110 in the exemplary embodiment shown in Fig. 1 has a cone shaped profile such that the inner shell 110 tapers from the second inlet 104 to the second outlet 105. If the inner shell 110 has a cone shaped profile, wherein a section of the cone shaped inner shell 110 at the second inlet 104 has a larger cross-sectional shape than a further section of the cone shaped inner shell 110 at the second outlet 105, a nozzle effect is generated and the streaming velocity of the compressed fluid is increased when flowing from the second inlet 104 to the second outlet 105.

The outer shell 120 has also a conical shape and is adapted to the conical shape of the inner shell 110 such that the outer channel may have in general a constant flow diameter.

The combustor device further comprises at least one burner device 106 which is coupled to the inner shell 110 and to the outer shell 120 such that fuel is injectable into the combustion chamber 111. The inner shell 110 forms a tubular shape wherein along a circumferential direction around the inner shell 110, a plurality of spaced burner devices 106 are arranged in order to provide a homogenous ignition of the fuel inside the combustion chamber 111. Each burner device 106 comprises a fuel injector for injecting fuel and/or a fuel/air mixture and an ignitor for igniting the fuel.

As shown in Fig.1 the first inlet 102, the first outlet 103, the second inlet 104 and the second outlet 105 are arranged such that a first component of a first flow direction 107 of the compressed fluid in the outer channel 101 is antiparallel to a second component of a second flow direction 108 of the compressed fluid in the combustion chamber 111. Hence, by the above described exemplary embodiment, a compact design of the combustion device is achieved.

The outer channel 101 comprises a fluid directing section, e.g. close to the first inlet 102, for directing the compressed fluid along a flow direction (i.e. the first flow direction 107) which has a component antiparallel to the main flow direction 153 of the gas turbine 150. The fluid directing section 109 comprises for example baffle plates or other directing fins for guiding the compressed fluid along a desired direction.

Furthermore, a further combustor device (not shown) may be coupled downstream of the compressor 151. The functional unit 600 is coupled to a further first outlet of a further outer shell of the further combustor device and a further second inlet of a further inner shell of the further combustor device.

Fig. 2 shows an exhaust section (exhaust ring) of the combustor device 100. The exhaust ring comprises an inlet tube 201 to which the combustor device 100 is coupled and through which the compressed hot fluid streams along the second flow direction 108. The exhaust section comprises an inner wall 203 having a tubular shape. The inner wall 203 surrounds for example the shaft of the gas turbine 150. Spaced apart from the inner wall 203, an outer wall 202 is arranged. The gap between the inner wall 203 and the outer wall 202 forms the second outlet 105. The outer wall 202 and the inner wall 203 may form a further fluid directing section such that the compressed hot fluid is directed from the second flow direction 108 flowing generally along a radial direction of the gas turbine 152 to a further flow direction which is in general parallel to the axial direction and the main flow direction 153, respectively, of the gas turbine 150. As shown in Fig. 2, the second outlet 105 may have a ring shape, so that the hot compressed fluid may stream within the turbine stage 152 homogeneously around the circumferential direction.

According to a further exemplary embodiment, the exhaust ring comprises a further inlet tube (not shown) to which a further combustor device (not shown) is coupled and through which further inlet tube the compressed hot fluid streams from the further combustor device along the second flow direction 108.

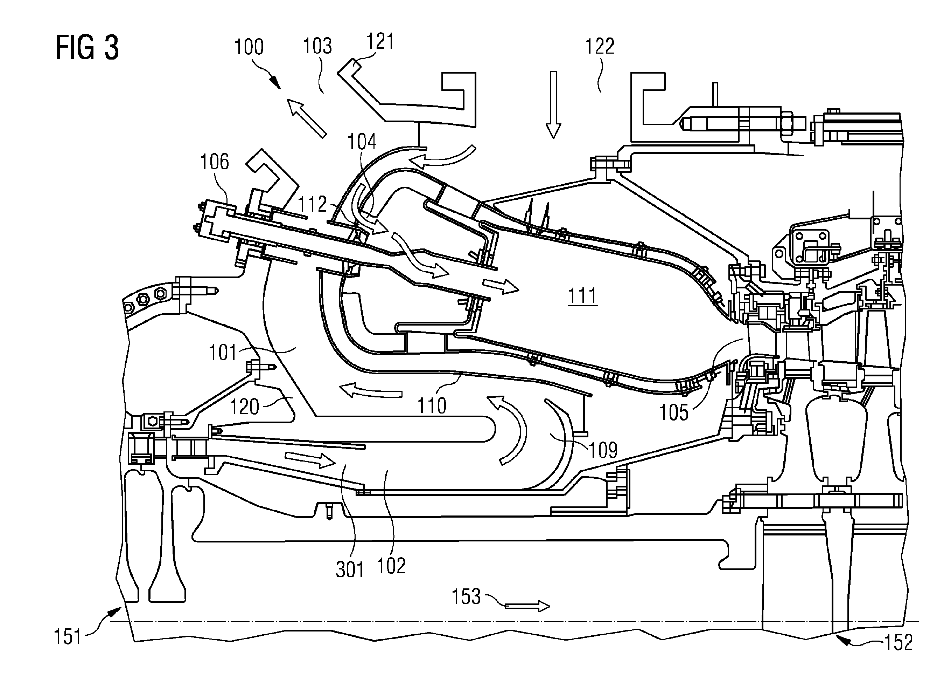

Fig. 3 shows a further exemplary embodiment of the combustion device 100. Similar to the combustion device 100 shown in Fig. 1 the gas turbine 150 comprises a combustion device 100 according to an exemplary embodiment of the present invention. The combustor device 100 comprises an inner shell 110 which forms a combustion chamber 111 and an outer shell 120 surrounding the inner shell 110 such that an outer channel 101 is formed between the inner shell 110 and the outer shell 120. The outer shell 120 comprises a first inlet 102 which is coupleable to a compressor 151 of the gas turbine 150 for feeding a compressed fluid from the compressor 151 into the outer channel 101 and a first outlet 103 for draining off the compressed fluid from the outer channel 101. The first outlet 103 is coupleable to a functional unit 600, in particular an oxygen generation unit, using the compressed fluid. The inner shell 110 comprises a second inlet 104 which is coupleable to the functional unit 600 such that the compressed fluid is feedable from the functional unit 600 into the combustion chamber 111. The inner shell 110 further comprises a second outlet 105 which is coupleable to a turbine stage 152 of the gas turbine 150 for exhausting the compressed fluid out of the combustion chamber 111.

The outer channel 101 may comprise in an entrance area of the compressed fluid a diffusor section 301 in order to provide a homogeneous flow crystal stakes of the incoming compressed fluid from the compressor 151. Subsequent and downstream of the diffusor section 301, the fluid directing section 109 is arranged. As shown in fig point 3 the fluid directing section 109 comprise a bended baffle for directing the compressed fluid to a desired direction.

The outer shell 120 comprises the outer flange 121 forming the first outlet 103. Furthermore, the outer shell 120 comprises the further outer flange 122 for providing a fluid connection from the functional unit 600 to the second inlet 104 of the inner shell 110.

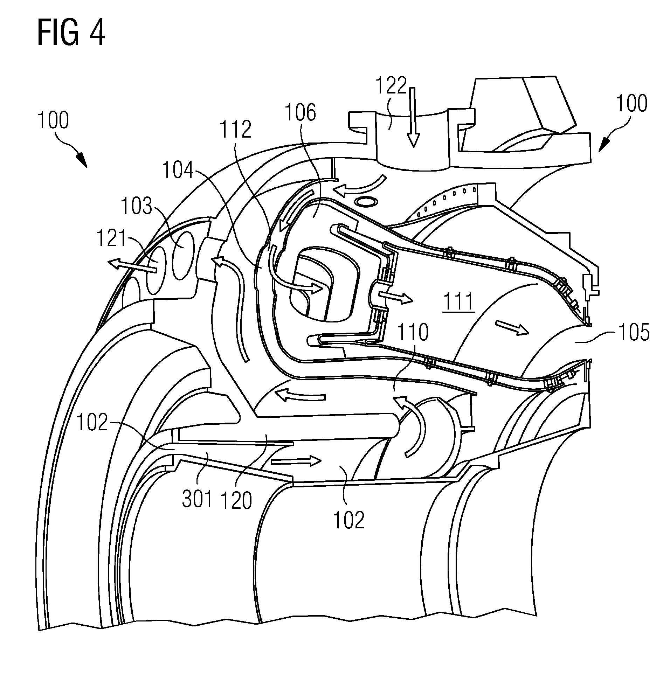

Fig. 4 shows a sectional view of the combustion device 100 shown in Fig. 3. The inner shell 110 and the outer shell 120 have a ring shape and surround spaced apart from each other the shaft of the gas turbine 150. Accordingly, a plurality of combustion chambers 111 or a unique larger ring shaped combustion chamber 111 is arranged along the circumferential direction of the gas turbine 150. Hence, a burner device 106 or burner devices 106 are arranged spaced apart from each other along the circumferential direction of the gas turbine 150.

The outer shell 120 may comprise a circumferential outer flange 121 which comprises a plurality of through holes forming the first outlet 103. Furthermore, the outer shell 120 comprises a further outer flange 122 comprising a plurality of through holes, wherein the through holes provide a fluid connection to the inner shell 110 and to the second inlet 104, respectively.

Fig. 5 shows a perspective view of the combustion device 100 as shown in Fig.4. In Fig. 5, the outer shell 120 is shown. Furthermore, the outer flange 121 forming the first outlet 103 is shown. In the first outer flange 121 a plurality of through holes forming the first outlet 103 are shown. Additionally, a plurality of further outer flange 122 are arranged along the circumferential direction at the outer flange 120, wherein the further outer flange 122 forms the connection from the functional unit 600 to the second inlet 104 of the inner shell 110.

Furthermore, a plurality of a circumferentially arranged burner fittings 501 are formed within the outer shell 120. Respective burner devices 106 are fixable to the burner fittings 501.

Fig.6 shows a schematic view of an oxygen generation system comprising the gas turbine 150 with the combustion device 100 and a functional unit 600 which is an oxygen generation unit 600.

The oxygen generation unit 600 comprises for example membranes which separate oxygen from the working fluid which is exhausted out of the gas turbine 150 and specifically out of the first outlet 103. The oxygen generation unit 600 is coupled to the first outlet 103 such that the compressed fluid which is heated up during flowing through the outer channel 101 is fed into the oxygen generation unit 600. The oxygen separating membranes separate partially the oxygen from the compressed fluid. The compressed fluid has a lower amount of oxygen after passing the oxygen separation membranes. The oxygen generation unit 600 is further coupled to the second inlet 104 and the compressed fluid is fed after leaving the oxygen generation unit 600 through the second inlet 104 into the combustion chamber 111 for being mixed with an injected fuel and for being burned together with the fuel. The remained oxygen amount in the compressed fluid after partial oxygen separation is still sufficient for the combustion within the combustion chamber 111 such that the combustion with the compressed fluid which has passed the oxygen generation unit is sufficiently efficient.

The oxygen generation system shown in Fig.6 further comprises an inlet control valve 601 which is coupled between the first outlet 103 and an inlet of the oxygen generation unit 600. Hence, the inlet mass flow of the compressed hot fluid into the oxygen generation unit 600 is controllable. Accordingly, an outlet control valve 602 is arranged between an outlet of the oxygen generation unit 600 and the second inlet 104 of the inner shell 110. Hence, an outlet mass flow out of the oxygen generation unit 600 is controllable.

Additionally, the bypass control valve 603 is arrangeable between an input line of the oxygen generation unit 600 and an output line of the oxygen generation unit 600. The bypass control valve 603 controls a bypass mass flow of the hot compressed fluid, such that an overall mass flow of hot compressed fluid flowing through the oxygen generation unit 600 is controllable.

The respective control valves 601, 602, 603 are connected for example to a control unit for controlling the respective mass flows.

The function of the control valves 601, 602, 603 are crucial when it comes to transient operation of the gas turbine 150. These valves 601, 602, 603 allow the gas turbine 150 to be operated in such a way that it can be started, ignited and synchronized to the grid without feeding any air into the oxygen generation unit 600. This allows for a more controllable up start of the oxygen generation unit 600 since the gas turbine 150 then is within its normal operating range. In the same way it is crucial that the oxygen generation unit 600 can be isolated during an emergency situation such as a loss of grid event. During a loss of grid event it is essential to reduce the hot gas volume that passes through the gas turbine 150 to a minimum to reduce the over speed of the gas turbine 150. This means that the valves 601, 602, 603 to the fuel supply and the valves 601, 602, 603 to the oxygen generation unit 600, the inlet valve 601 and outlet valve 602 has to shut very fast and the bypass valve 603 has to open during the same time frame to reduce over speed of the gas turbine 150.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Combustor device (100) for a gas turbine (150), the combustor device (100) comprising
an inner shell (110) which forms a combustion chamber (111),
an outer shell (120) surrounding the inner shell (110) such that an outer channel (101) is formed between the inner shell (110) and the outer shell (120),
wherein the outer shell (120) comprises
a first inlet (102) which is coupleable to a compressor (151) of the gas turbine (150) for feeding a compressed fluid from the compressor (151) into the outer channel (101) and
a first outlet (103) for draining off the compressed fluid from the outer channel (101),
wherein the first outlet (103) is coupleable to a functional unit (600), in particular an oxygen generation unit, using the compressed fluid,
wherein the inner shell (110) comprises a second inlet (104) which is coupleable to the functional unit (600) such that the compressed fluid is feedable from the functional unit (600) into the combustion chamber (111), and
wherein the inner shell (110) further comprises a second outlet (105) which is coupleable with to a turbine stage (152) of the gas turbine (150) for exhausting the compressed fluid out of the combustion chamber (111).

2. Combustor device (100) according to claim 1,
wherein the second inlet (104) and the second outlet (105) are formed with respect to each other such that a flow diameter of the second inlet (104) is larger than a further flow diameter of the second outlet (105).

3. Combustor device (100) according to claim 1 or 2,
wherein the inner shell (110) has a cone shape profile such that the inner shell (110) tapers from the second inlet (104) to the second outlet (105).

4. Combustor device (100) according to one of the claims 1 to 3, further comprising
at least one burner device (106) which is coupled to the inner shell (110) such that fuel is injectable into the combustion chamber (111).

5. Combustor device (100) according to one of the claims 1 to 4,
wherein the first inlet (102), the first outlet (103), the second inlet (104) and the second outlet (105) are arranged such that a first component of a first flow direction (107) of the compressed fluid in the outer channel (101) is antiparallel to second component of a second flow direction (108) of the compressed fluid in the combustion channel.

6. Combustor device (100) according to one of the claims 1 to 5,
wherein the outer channel (101) comprises a fluid directing section (109) for directing the compressed fluid along a flow direction which has a component antiparallel to the main flow direction (153) of the gas turbine (150).

7. Gas turbine (150), comprising
a combustor device (100) according to one of the claims 1 to 6,
the functional unit (600) which is coupled to the first outlet (103) of the outer shell (120) and the second inlet (104) of the inner shell (110).

8. Gas turbine (150) according to claim 7, further comprising
a further combustor device (100) according to one of the claims 1 to 6,
wherein the functional unit (600) is coupled to a further first outlet (103) of a further outer shell (120) of the further combustor device (100) and a further second inlet (104) of a further inner shell (110) of the further combustor device (100).

9. Gas turbine (150) according to claim 7 or 8,
wherein the functional unit (600) is an oxygen generation unit.

10. Method for operating a combustor device (100) according to one of the claims 1 to 6, the method comprising
feeding a compressed fluid from the compressor (151) into the outer channel (101),
draining off the compressed fluid from the outer channel (101),
using the compressed fluid by the functional unit (600), in particular the oxygen generation unit,
feeding the compressed fluid from the functional unit (600) into the combustion chamber (111), and
exhausting the compressed fluid out of the combustion chamber (111).
